# EUROPÄISCHE PATENTANMELDUNG

(11) **EP 4 454 469 A1**
(43) Veröffentlichungstag der Anmeldung: **30.10.2024**
(21) Anmeldenummer: 24165365.8
(22) Anmeldetag: 21.03.2024
(51) Int. Cl.: A23B 4/09, A22C 9/00, A23B 4/28, A23L 3/375

(54) **VORRICHTUNG UND VERFAHREN ZUM KÜHLEN VON FRISCHFLEISCH MIT EINEM KÜHLMEDIUM**

(30) Priorität: 29.03.2023 DE 102023108068
(71) Anmelder: Messer SE & Co. KGaA, 65812 Bad Soden (DE)
(72) Erfinder: Claeys, Jean-Claude, 2870 Puurs (BE)
(74) Vertreter: Münzel, Joachim R.

(57) **Zusammenfassung**

Um einen gleichmäßigen und homogenen Reifungsprozess von Frischfleisch zu bewirken, wird ein Kühlmedium in das Innere des Fleischstücks injiziert, dessen Temperatur gleich oder niedriger ist als die Temperatur auf der Oberfläche des Fleischstücks. Die Injektion erfolgt mittels einer Vorrichtung, die eine oder mehrere als Doppelkanüle ausgebildete Injektionseinrichtungen aufweist, wobei eine der Kanülen als Spülkanal zum Zuführen des Kühlmediums und die andere Kanüle als Abzugskanal zum Abführen von Kühlmedium dient, das beim thermischen Kontakt mit dem Fleisch erwärmt wurde, und zumindest eine der Kanülen eine seitliche Strömungsöffnung aufweist. Als Kühlmedium kommt bevorzugt ein kryogenes Kühlmedium, wie beispielsweise flüssiges Kohlendioxid oder kalter gasförmiger oder flüssiger Stockstoff zum Einsatz.

## Beschreibung

Die Erfindung betrifft eine Vorrichtung sowie ein Verfahren zum Behandeln von Frischfleisch mit einem Kühlmedium.

Als "Frischfleisch" soll im Folgenden Fleisch im Behandlungszeitraum zwischen der Schlachtung und der abgeschlossenen Fleischreifung bezeichnet werden. Die Fleischreifung umfasst eine Reihe biochemischer Reaktionen, die nach der Schlachtung im Muskelfleisch stattfinden. Verschiedene fleischeigene Enzyme bewirken diese Prozesse und fördern so die Genussfähigkeit von Fleisch. Der Reifungsprozess muss unter kontrollierten Bedingungen, insbesondere bei einer kontrollierten Temperatur und einem kontrollierten pH-Wert erfolgen.

Die biochemischen Vorgänge sowie die strukturellen Veränderungen *post mortem* im Fleisch verschiedener Schlachttiere und die damit einhergehenden Änderungen in der Fleischqualität werden beispielsweise in dem Artikel von R. Binke: "Vom Muskel zum Fleisch", Mitteilungsblatt BAFF 42, Nr. 162, S. 347 (2003) beschrieben.

Durch die Anhäufung des Stoffwechselproduktes Laktat (Salz der Milchsäure) sinkt der Muskel-pH-Wert innerhalb weniger Stunden von pH 6,8 bis 7,2 auf pH 5,5. Man bezeichnet diesen Prozess auch als Säuerung. Die Geschwindigkeit dieses Prozesses und der abschließende pH-Wert sind von großer Bedeutung für den Reifungsprozess und die Lagerfähigkeit und somit für die Qualität des Fleisches. Da diese Vorgänge temperaturabhängig sind, hat auch der nach der Schlachtung erfolgende Kühlprozess einen entscheidenden Einfluss auf die Fleischqualität.

Hohe Temperaturen im Fleisch führen zu schnell ablaufenden biochemischen Reaktionen, die zu einer zu raschen Absenkung des pH-Werts auf Werte unter 5,6 und in der Folge zur Ausprägung von unerwünschtem "PSE-Fleisch" führen können. Andererseits ist eine zu rasche Kühlung des Schlachtkörpers auf Temperaturen von unter 10°C vor Eintritt der Totenstarre ebenfalls nachteilig, da sie die für eine gute Fleischqualität notwendige Säuerung des Fleisches hemmt und im Muskel eine Kälteverkürzung ("Cold Shortening") verursacht. Das entstehende "DFD - Fleisch" (beim Schwein) oder "DCB-Fleisch" (beim Rind) ist durch einen hohen pH-Wert von über 6,2 geprägt; es ist zäh und hat ein geringes Safthaltevermögen.

Darüber hinaus ist es insbesondere bei größeren Fleischstücken von Bedeutung, dass die Abkühlung homogen im gesamten Fleischvolumen erfolgt, da eine ungleiche Abkühlgeschwindigkeit zu ungleichen Reifungszuständen und somit ungleichen Fleischqualitäten innerhalb des Fleischstücks führt. Dies führt beispielsweise bei der Verarbeitung von Schinken dazu, dass das tief im Innern in unmittelbarer Nähe zum Knochen gelegene Fleisch häufig als minderwertiges Fleisch entfernt und vom weiteren Verarbeitungsprozess ausgeschlossen wird.

Der Erfindung liegt daher die Aufgabe zu Grunde, den Reifungsprozess von Frischfleisch nach der Schlachtung dahingehend zu verbessern, dass eine homogenere Fleischqualität insbesondere bei großvolumigen Fleischstücken, wie beispielsweise unzerteilten Schinken, erzielt wird.

Gelöst ist diese Aufgabe durch eine Vorrichtung mit den Merkmalen des Patentanspruchs 1 sowie durch ein Verfahren mit den Merkmalen des Patentanspruchs 7. Vorteilhafte Ausgestaltungen der Erfindung sind in den Unteransprüchen angegeben.

Eine erfindungsgemäße Vorrichtung zum Behandeln eines Fleischstücks mit einem Kühlmedium umfasst also ein Gehäuse und wenigstens eine zum Hineintreiben in ein zu behandelndes Fleischstück bestimmte Injektionseinrichtung. Die wenigstens eine Injektionseinrichtung weist eine aus zwei Kanülen (Hohlnadeln) aufgebaute Doppelkanüle auf, wobei eine erste Kanüle (hier "Spülkanal" genannt) zum Zuführen eines Kühlmediums in das Fleischstück und eine zweite Kanüle (hier "Abzugskanal" genannt) zum Ableiten von beim Wärmekontakt mit dem Fleischstück erwärmtem Kühlmedium bestimmt ist. Bevorzugt ist im Gehäuse eine an eine Zuführleitung zum Zuführen eines Kühlmediums anschließbare Zuführung und eine an eine Abführleitung anschließbare Ausleitung vorgesehen, wobei die Zuführung mit dem Spülkanal bzw. den Spülkanälen und die Ausleitung mit dem Abzugskanal bzw. den Abzugskanälen der Injektionseinrichtung bzw. Injektionseinrichtungen strömungsverbunden sind. Dabei ist wenigstens eine der Kanülen im Bereich ihres Vorderabschnitts, also dem Abschnitt, der beim Einsatz der Vorrichtung zuerst in das zu behandelnde Fleischstück eingebracht wird, mit wenigstens einer seitlich - also in einer zur Längsachse der Kanüle radialen Richtung - angeordneten Strömungsöffnung ausgerüstet.

Über die Zuführung und den Spülkanal wird ein Kühlmedium in das Innere des Fleischstücks eingebracht. Das Kühlmedium tritt anschließend mit dem umgebenden Gewebe des Fleischstücks in Wärmekontakt, wobei sich das Fleisch in diesem Bereich abkühlt und das Kühlmedium erwärmt. Das erwärmte Kühlmedium wird während der und/oder im Anschluss an die Injektion des frischen Kühlmediums aus dem Ort bzw. den Orten der Injektion (im Innern des Fleischstücks) über den Abzugskanal und die Ausleitung abgezogen. Beispielsweise wird das Kühlmedium während eines kurzen Zeitpulses über den Spülkanal eingetragen und sammelt sich gasförmig im Innern des Fleischgewebes. Durch den Druck des Gewebes und des eingetragenen Kühlmediums, der ggf. noch durch Verdampfen oder Sublimation des Kühlmediums erhöht wird, verlässt dieses anschließend selbsttätig des behandelte Fleischstück über den Abzugskanal. Ein aktiver Abzug des Kühlmediums beispielsweise durch Absaugen, ist erfindungsgemäß ebenfalls möglich, jedoch nicht zwingend erforderlich.

Die Injektionseinrichtung oder die Injektionseinrichtungen kann/können unmittelbar am Gehäuse montiert sein, oder sie kann/können jeweils über flexible Leitungen mit den Gehäuse verbunden sein, um die Doppelkanüle/n leichter und flexibler in das Fleisch einbringen zu können. Bevorzugt ist die Injektionseinrichtung bzw. sind die Injektionseinrichtungen lösbar mit dem Gehäuse verbunden, damit sie bei Bedarf ausgetauscht werden können. Die Vorrichtung ist so ausgebildet, dass die Injektionseinrichtung oder die Injektionseinrichtungen durch eine Bedienperson manuell oder maschinell problemlos in das zu behandelnde Fleischstück eingeführt werden kann.

Die im Gehäuse angeordnete Zuführung ist mit einem Anschluss zum Anschließen einer Zuführleitung für ein Kühlmedium, beispielsweise eine Zuleitung für druckverflüssigtes Kohlendioxid oder für kälteverflüssigten oder flüssigen oder kalten gasförmigen Stickstoff, ausgerüstet. Die im Gehäuse angeordnete Ausleitung für beim Wärmekontakt mit dem Fleisch erwärmtes Kühlmedium ist mit einem Anschluss zum Anschließen einer Abzugsleitung, beispielsweise einer Gasabzugsleitung ausgerüstet. Zweckmäßigerweise ist/sind das Gehäuse und/oder die Injektionseinrichtung/en zudem mit einem Handgriff ausgerüstet, um die manuelle Bedienung der erfindungsgemäßen Vorrichtung zu erleichtern.

Die seitliche Anordnung der wenigstens einen Strömungsöffnung an wenigstens einer der Kanülen führt dazu, dass das Kühlmedium über den Spülkanal zumindest teilweise in radiale Richtung in das umgebende Gewebe eingebracht wird (falls eine seitliche Austrittsöffnung im Spülkanal angeordnet ist), bzw. zumindest teilweise aus radialer Richtung aus dem umliegenden Gewebe in den Abzugskanal einströmt (falls eine seitliche Strömungsöffnung im Abzugskanal angeordnet ist). Durch die seitliche Anordnung zumindest einer Austrittsöffnung wird die Gefahr reduziert, dass beim Vortrieb der Injektionseinrichtung in das zu behandelnde Fleischstück die entsprechende Kanüle durch eindringendes Fleischgewebe verstopft wird. Bevorzugt sind dabei in wenigstens einer Kanüle eine Mehrzahl seitlicher Strömungsöffnung vorgesehen. Weiterhin kann die mit der wenigstens einen seitlichen Strömungsöffnung ausgerüstete Kanüle an ihrem distalen, d.h. im Einsatz der Vorrichtung in das zu behandelnde Fleischstück eindringenden Ende, geschlossen ausgebildet sein, sodass der gesamte diese Kanüle betreffende Fluidtransport über die wenigstens eine seitliche Strömungsöffnung erfolgt.

Als Kühlmedium kommt bevorzugt ein kryogenes Kühlmedium zum Einsatz, das verflüssigt oder als kaltes Gas über den Spülkanal in das Fleischstück injiziert wird, beispielsweise Kohlendioxid oder Stickstoff. Bei der Wahl eines kryogenen Mediums als Kühlmedium genügen vergleichsweise geringe Mengen, um den erforderlichen Kühleffekt zu erzielen. Beispielsweise wird zwischen 1g bis 250g, bevorzugt nicht mehr als 150g, Kühlmedium in Form von flüssigem Stickstoff oder flüssigem Kohlendioxid pro Kilogramm Fleisch zugeführt. Demzufolge kann auch die eingesetzte Injektionseinrichtung klein dimensioniert und somit übermäßige Verletzungen des Fleischgewebes bei der Behandlung vermieden werden. Besonders bevorzugt ist Kohlendioxid, das sich beim Austritt aus dem Spülkanal unter Entstehung von Kohlendioxidgas und Kohlendioxidschnee entspannt. Beim thermischen Kontakt mit dem umliegenden Gewebe des Fleischstücks erwärmt es sich und der Kohlendioxidschnee sublimiert. Das entstehende Kohlendioxidgas wird über den Abzugskanal abgezogen und vom Einsatzort entfernt. Im Falle der Verwendung von flüssigem Kohlendioxid als Kühlmedium sind alle Leitungen einschließlich der beiden Kanülen entsprechend druckfest auszulegen. Alternativ kann beispielsweise Stickstoff zum Einsatz kommen, der verflüssigt oder im gasförmigen Zustand zugeführt wird, wobei auf eine thermische Isolierung der Zuführleitung Isolierung zu achten ist.

Die Zufuhr des Kühlmediums wird bevorzugt mittels einer Steuerung geregelt, beispielsweise in Abhängigkeit von einer im Fleisch, im Bereich der Injektionsstelle oder der Injektionsstellen des Kühlmediums laufend oder vorgegebenen Zeitabständen gemessenen Temperatur. Dabei ist insbesondere darauf zu achten, dass das Fleisch durch die Zuführung lokal nicht unterkühlt wird.

Spülkanal und Abzugskanal der Injektionseinrichtung werden bevorzugt von metallischen, beispielsweise aus Edelstahl gefertigten Kanülen gebildet, deren Außendurchmesser von jeweils zwischen 1 mm und 15 mm, bevorzugt zwischen 2 mm und 10 mm und eine Länge - abhängig von der gewünschten Eindringtiefe in das Innere des zu behandelnden Fleischstücks - von beispielsweise zwischen 1 mm und 200 mm aufweisen.

Die beiden Kanülen können nebeneinander oder koaxial zueinander in der Injektionseinrichtung angeordnet sein. Im Falle einer koaxialen Anordnung sollte der Außendurchmesser des den äußeren Kanal bildenden, also radial außenseitig angeordneten Kanüle 5 mm bis 15 mm nicht übersteigen, während der Außendurchmesser des den inneren Kanal bildenden Kanüle etwa 1 mm bis 10 mm betragen sollte. Zweckmäßigerweise ist dabei der Spülkanal innerhalb des Abzugskanals angeordnet, um jenen mit diesem gegenüber dem umliegenden Fleischgewebe thermisch abzuschirmen.

Eine zweckmäßige Weiterbildung der Erfindung sieht vor, dass der Vorderabschnitt zumindest einer der Kanülen, insbesondere die zum Abführen des erwärmten Kühlmediums bestimmte Kanüle, geschlossen ist, um zu verhindern, dass die Vorrichtung während des Einsatzes, also insbesondere beim Einbringen in das zu behandelnde Gewebe, durch dieses verstopft und damit unbrauchbar gemacht wird.

Im Falle der koaxialen Anordnung der Kanülen sieht eine besonders bevorzugte Ausgestaltung der Erfindung vor, die radial außenseitig angeordneten Kanüle teleskopartig auszubilden, mit einem rohrförmigen Hinterabschnitt sowie einem axial begrenzt beweglich angeordneten Vorderabschnitt, der in den Hinterabschnitt einschiebbar oder über diesen ziehbar ist. Der beispielsweise zylindrisch oder als schräg abgeschnittener Zylinder geformte Vorderabschnitt ist zudem bevorzugt stirnseitig geschlossen ausgebildet, jedoch mit seitlichen Austrittsöffnungen ausgerüstet.

Beim Einführen der Injektionseinrichtung in das Fleischstück wird bei dieser Ausführungsform der Vorderabschnitt in bzw. über den Hinterabschnitt gedrückt, sodass die seitlichen Öffnungen des Vorderabschnitts von den Seitenwänden des Hinterabschnitts verdeckt sind. Ist in dieser Position die Injektionseinrichtung vorderseitig vollständig geschlossen, wird beim Einführen der Injektionseinrichtung in das Fleischstück das Eindringen von Fleischgewebe verhindert. Bei Erreichen des bestimmungsgemäßen Einsatzortes im Fleischstück werden die beiden Abschnitte der äußeren Kanüle auseinandergezogen, beispielsweise durch eine begrenzte Rückwärtsbewegung der Injektionseinrichtung, bei der der Vorderabschnitt mittels geeigneter Halteelemente im Fleischgewebe zurückgehalten wird. Die seitlichen Öffnungen des Vorderabschnitts sind nunmehr nicht mehr vom Hinterabschnitt verdeckt und eine Strömungsverbindung zwischen den beiden Kanälen und dem umgebenden Fleischgewebe ist gegeben. Kühlmedium, das über den inneren Kanal zugeführt wird, tritt über einen Teil der seitlichen Öffnungen des Vorderabschnitts in das umliegende Fleischgewebe ein, gelangt mit diesem in Wärmeaustausch und wird anschließend über einen anderen Teil der seitlichen Öffnungen des Vorderabschnitts über den äußeren Kanal abgezogen und schließlich abgeführt. Um einen ungestörten Fluss des Kühlmediums zu gewährleisten ist es dabei zweckmäßig, die Injektionseinrichtung so auszubilden, dass die seitlichen Öffnungen des innenseitig angeordneten Kanals mit Öffnungen des Vorderabschnitts der äußeren Kanüle im Einsatz der Vorrichtung zumindest teilweise miteinander fluchten und/oder die seitlichen Öffnungen der äußeren Kanüle einen größeren Durchmesser aufweisen als die der inneren Kanüle und/oder in der äußeren Kanüle mehr seitliche Öffnungen als in der inneren Kanüle vorgesehen sind. Zusätzlich zu den seitlichen Öffnungen kann im Übrigen in einer der Kanülen oder in beiden eine stirnseitige Öffnung im Vorderabschnitt der Injektionseinrichtung vorgesehen sein.

Eine ebenfalls vorteilhafte Ausgestaltung der erfindungsgemäßen Vorrichtung sieht vor, dass der Vorderabschnitt der äußeren Kanüle an seiner im bestimmungsgemäßen Einsatz in das Fleischstück hineinragenden Spitze angeschliffen oder abgestumpft ausgebildet ist. Die jeweilige Ausbildung erfolgt in Abhängigkeit von der zu behandelnden Tier- oder Fleischsorte bzw. Gewebeart und/oder dem Einsatzort innerhalb des Fleischstücks. Eine durch Anschliff spitz ausgebildete Injektionseinrichtung schneidet in das Fleischgewebe ein, während eine abgestumpfte Zuformung die Zellen des Fleischgewebes um die Injektionseinrichtung herum verdrängt, ohne die Zellen selbst zu verletzen.

Es ist möglich, eine erfindungsgemäße Vorrichtung mit lediglich einer Injektionseinrichtung auszurüsten. Insbesondere für größere Fleischstücke empfiehlt es sich aber, zwei oder mehr beabstandet voneinander angeordnete Injektionseinrichtungen vorzusehen, die bevorzugt fest mit dem Gehäuse verbunden sind. Dadurch wird das Kühlmedium an mehreren voneinander beabstandeten Orten in das Fleisch eingetragen, wodurch ein großer Volumenbereich im zu behandelnden Fleischstück gleichzeitig gekühlt wird. Dabei sind bevorzugt die Spülkanäle aller Injektionseinrichtungen an einer gemeinsamen Zuführung im Gehäuse und die Abzugskanäle aller Injektionseinrichtungen an einer gemeinsamen Abzugsleitung im Gehäuse angeschlossen, um eine möglichst kompakte Bauweise zu gewährleisten.

Beim Einbringen eines Kühlmediums in Frischfleisch unter Verwendung einer Vorrichtung nach einem der vorhergehenden Ansprüche wird zunächst die Injektionseinrichtung in ein Fleischstück eingebracht, anschließend ein Kühlmedium über die Zuführung und den Spülkanal in das Fleischstück zugeführt. Das injizierte Kühlmedium erwärmt sich in thermischen Kontakt mit dem umgebenden Fleischgewebe und wird über den Abzugskanal und die Ausleitung abgeführt wird. Bevorzugt erfolgt die Zuführung des Kühlmediums dabei so, dass das Fleischstück innerhalb von 30 min bis 120 min um 25°C bis 40°C abgekühlt wird, wobei diese Werte beispielsweise durch eine Regelung der Zufuhr an Kühlmediums in Abhängigkeit von laufend gemessenen Temperaturen und/oder durch festgelegte Mengen an Kühlmedium, die zuvor für eine zu behandelnde Fleischsorte empirisch ermittelt wurden, ermöglicht werden.

Die Erfindung eignet sich zur Behandlung verschiedener Fleischsorten, insbesondere von Rind- und Schweinefleisch. Eine bevorzugte Anwendung ist die Behandlung von Schinken (Schweinekeule oder -schulter). Durch die Erfindung gelingt es, insbesondere auch in einem großen, unzerteilten oder nicht entbeinten Fleischstück eine rasche Abkühlgeschwindigkeit im gesamten Fleischvolumen zu erzielen, wodurch eine gleichmäßig hohe Fleischqualität erzielt wird. Bevorzugt erfolgt dabei eine gleichmäßige Abkühlung im gesamten Volumen des Fleischstücks um eine Temperaturdifferenz von 25 bis 40°C innerhalb eines Zeitraums von 30 min bis 120 min.

Anhand der Zeichnung soll ein Ausführungsbeispiel der Erfindung näher erläutert werden. In schematischen Ansichten zeigen:

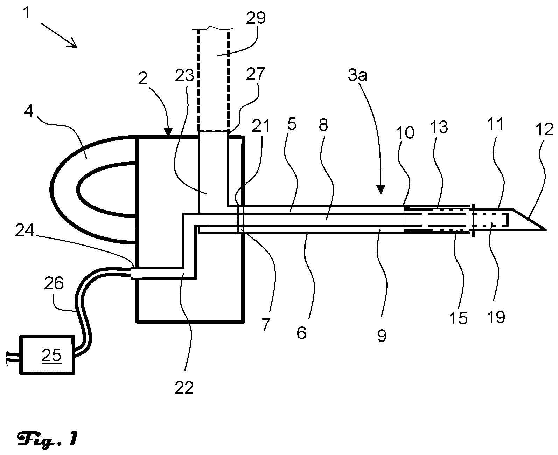

- Fig. 1:: Eine erfindungsgemäße Vorrichtung im Längsschnitt längs der Schnittlinie I-I in Fig. 2,
- Fig. 2:: Die erfindungsgemäße Vorrichtung aus Fig. 1 im einer Draufsicht von oben,
- Fig. 3a:: Die Vorrichtung aus Fig. 1 in einer ersten Betriebsposition in einem vergrößerten Ausschnitt und
- Fig. 3b:: Die Vorrichtung aus Fig. 1 in einer zweiten Betriebsposition in einem vergrößerten Ausschnitt.

Die in den Zeichnungen gezeigte Vorrichtung 1 umfasst ein beispielsweise aus Edelstahl oder Kunststoff gefertigtes Gehäuse 2 sowie eine Anzahl - im hier gezeigten Ausführungsbeispiel vier - Injektionseinrichtungen 3a-3d. Zur Erleichterung der manuellen Handhabung der Vorrichtung 1 ist am Gehäuse zudem ein Handgriff 4 angebracht.

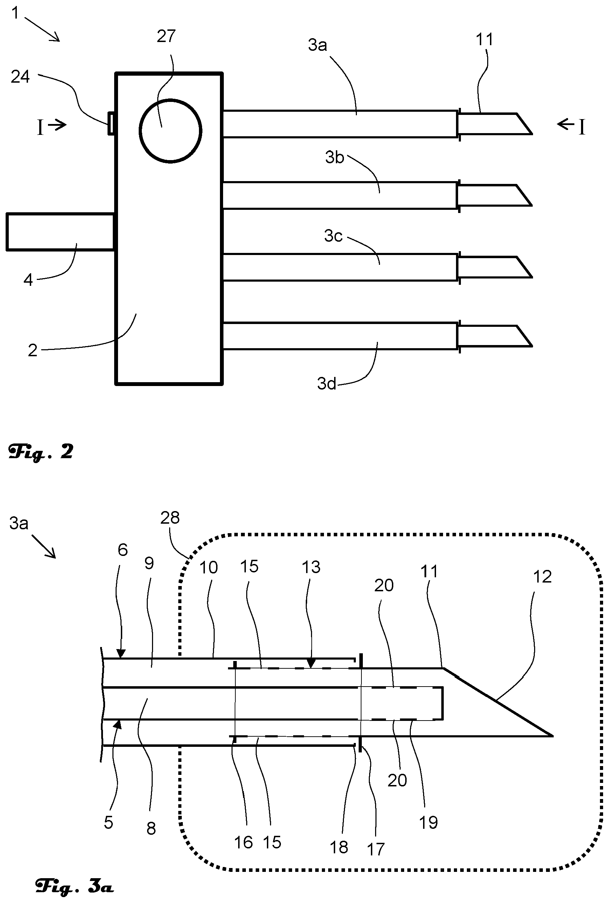

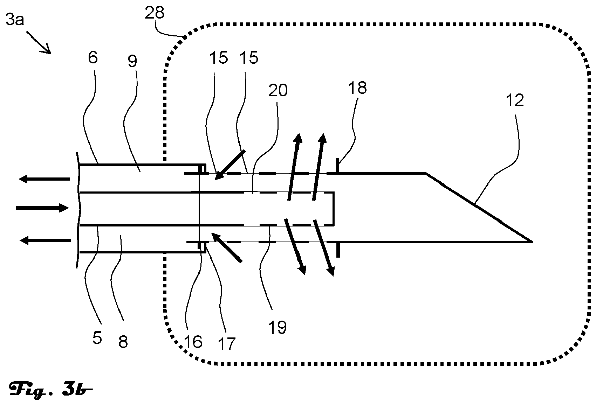

In den Fig. 3a und 3b ist die Spitze der Injektionseinrichtung 3a vergrößert dargestellt. Im Übrigen sind die Injektionseinrichtungen 3b, 4c und 3d in gleicher Weise wie die Injektionseinrichtung 3a aufgebaut.

Die jeweils als Doppelkanülen ausgebildeten Injektionseinrichtungen 3a-3d umfassen zwei koaxial zueinander angeordnete Kanülen 5, 6, die an einem gemeinsamen Befestigungsabschnitt 7 im Gehäuse 2 befestigt sind. Bei den Kanülen handelt es sich um beispielsweise metallische, insbesondere aus Edelstahl gefertigte Röhrchen, deren Länge - in Abhängigkeit von der geforderten Eindringtiefe - zwischen 1 mm und 200 mm beträgt, und deren Außendurchmesser zwischen 1 mm und 3 mm (innere Kanüle 5) bzw. zwischen 3 mm und 15 mm (äußere Kanüle) beträgt, wobei der Innendurchmesser der äußeren Kanüle 6 mindestens 1 mm bis 4 mm größer als der Außendurchmesser der inneren Kanüle 5 betragen sollte. Durch die Kanülen 5, 6 wird das Innere der Injektionseinrichtung 3a in zwei Strömungskanäle 8, 9 unterteilt, nämlich einen - im Beispiel radial innenseitig angeordneten - Spülkanal 8, der zum Zuführen eines Kühlmediums bestimmt ist, und einen im Beispiel radial außenseitig angeordneten - Abzugskanal 9, der dem Abführen von Kühlmedium dient.

Die radial außenseitig angeordnete Kanüle 6 ist teleskopartig aufgebaut, mit einem Hinterabschnitt 10 und einem Vorderabschnitt 11, der axial begrenzt beweglich im Hinterabschnitt 10 aufgenommen ist. Der Vorderabschnitt 11 ist an seiner Spitze 12 angeschliffen, jedoch strömungstechnisch geschlossen, und weist in einem sich an die Spitze 12 anschließenden Abschnitt 13 eine Vielzahl seitlicher (radialer) Strömungsöffnungen 15 auf, die um den gesamten Umfang des Vorderabschnitts 11 herum verteilt angeordnet sind. Für die Begrenzung der axialen Beweglichkeit innerhalb der Kanüle 6 sorgen entsprechende Bewegungsbegrenzer 16, 17, 18 in Gestalt, beispielsweise, von auf dem Vorderabschnitt 11 bzw. dem Hinterabschnitt 10 befestigen Halteringen o.ä.

Ebenso ist die Kanüle 5 auf seiner von Gehäuse 2 entgegengesetzten Stirnseite geschlossen ausgeführt und weist im Bereich seines Vorderabschnitts 19 eine Vielzahl seitlicher Strömungsöffnungen 20 auf, die um den gesamten Umfang des Vorderabschnitts 19 herum verteilt angeordnet sind. Bevorzugt sind die Strömungsöffnungen 20 in der Kanüle 5 und die Strömungsöffnungen 15 im Vorderabschnitt 11 zumindest teilweise in eine miteinander fluchtende Position bringbar. Bevorzugt sollte die Anzahl der Strömungsöffnungen 15 höher als die Anzahl der Strömungsöffnungen 20 sein und/oder diese einen kleineren Durchmesser aufweisen als die Strömungsöffnungen 15.

Der Befestigungsabschnitt 7 der Injektionseinrichtung 3 ist mit einem Befestigungsanschluss 21 am Gehäuse 2 derart verbunden, dass einerseits eine mechanisch feste, jedoch lösbare Verbindung zwischen Gehäuse 2 und Injektionseinrichtung 3 hergestellt wird, andererseits jedoch eine strömungstechnisch jeweils getrennte Verbindung zwischen dem Spülkanal 8 und einer Zuführleitung 22 im Gehäuse 2 sowie zwischen dem Abzugskanal 9 und einer Abgasleitung 23 im Gehäuse 2 hergestellt wird.

Die Zuführleitung 22 erstreckt sich durch das Gehäuse 2 hindurch und endet auf dessen der Injektionseinrichtung 3 gegenüberliegenden Seite an einem Anschlussstutzen 24. Dabei sind im Ausführungsbeispiel die von den Injektionseinrichtungen 3a-3d führenden Zuleitungen in hier nicht gezeigter Weise strömungstechnisch miteinander verbunden und münden an einem gemeinsamen Anschlussstutzen 24 aus; es ist jedoch ebenso möglich, für jede der Injektionseinrichtungen 3a-3d getrennte Zuleitungen mit jeweils eigenen Anschlussstutzen vorzusehen. Optional kann in der Zuführleitung 22 ein Ventil (hier nicht gezeigt) zur Regelung der Zufuhr von Kühlmedium durch die Zuführleitung 22 vorgesehen sein, sowie eine im Gehäuse 2 angeordnete Steuerungseinrichtung (hier gleichfalls nicht gezeigt), mittels der ein solches Ventil durch eine Bedienperson manuell betätigt werden kann. Um Platz und Gewicht zu sparen ist es jedoch vorteilhafter, eine Steuereinheit 25 samt Ventil außerhalb des Gehäuses anzuordnen. Von einer solchen externen Steuereinheit 25 kann beispielsweise eine flexible Schlauchleitung 26 ausgehen, die mit der Zuführleitung 22 am Anschlussstutzen 24 strömungsverbunden ist.

Die Abgasleitung 23 erstreckt sich ebenfalls durch das Gehäuse 2 hindurch und mündet an einem Abgasanschluss 27 aus, der im Ausführungsbeispiel als gemeinsamer Abgasanschluss für alle Injektionseinrichtungen 3a-3d dient. Bevorzugt ist der Abgasanschluss in einer oberen Fläche des Gehäuses 2 angerordnet ist.

Im Einsatz der Vorrichtung 1 wird eine an einem hier nicht gezeigten Speichertank für ein Kühlmedium angeschlossene Schlauchleitung 26 an den Anschlussstutzen 24 angeschlossen. Des Weiteren wird eine Abgasleitung 29 an den Abgasanschluss 27 angeschlossen. Sodann wird die Vorrichtung 1 einem zur Behandlung bestimmten Fleischstück 28, beispielsweise einem Schinken, zugeführt, wobei die Injektionseinrichtungen 3a-3d in das Fleischstück 28 eingeführt werden. Während der Einführung der Injektionseinrichtungen 3a-3d befinden sich diese in dem in Fig. 3a gezeigten Betriebszustand: Durch den Widerstand des umgebenden Fleischgewebes werden Vorderabschnitt 11 und Hinterabschnitt 10 der Kanüle 6 zusammengedrückt, bis das Zusammenwirken der Bewegungsbegrenzer 17, 18 ein weiteres Einschieben des Vorderabschnitts 11 in den Hinterabschnitt 10 unterbindet. In diesem Betriebszustand sind die Strömungsöffnungen 15 des Vorderabschnitts 11 vollständig vom Hinterabschnitt 10 umschlossen. Dieses verhindert somit, dass die Strömungsöffnungen 15 von eindringendem Fleischgewebe verstopft werden.

Bei Erreichen des vorbestimmten Behandlungsorts, wenn sich beispielsweise die Spitzen der Injektionsnadeln 3a-3d in einem mittleren Bereich des Fleischstücks 28, beispielsweise in der Nähe des Knochens eines Schinkens befinden, wird die Vorrichtung 1 durch eine Bedienperson am Handgriff 4 um eine begrenzte Wegstrecke, die die axiale Länge des Vorderabschnitts 11 nicht überschreiten sollte, zurückgezogen. Der Bewegungsbegrenzer 18 steht um ein Geringes über den radialen Außendurchmesser der Kanüle 6 von diesem vor; beim Zurückziehen der Vorrichtung 1 wird der Vorderabschnitt 11 somit am Bewegungsbegrenzer 18 zurückgehalten, und die Vorrichtung 1 gelangt in den in Fig. 3b gezeigten Betriebszustand. In diesem steht der Vorderabschnitt 11 von der Stirnseite der Kanüle 6 vor, und die Strömungsöffnungen 15 sind außenseitig nicht mehr vom Hinterabschnitt 10 bedeckt. Zudem sind die Strömungsöffnungen 15, 20 derart angeordnet, dass einige der Strömungsöffnungen 15 der Kanüle 6 mit den Strömungsöffnungen 20 der Kanüle 5 fluchten.

Sodann wird ein Kühlmedium, beispielsweise flüssiges Kohlendioxid oder flüssiger oder kalter gasförmiger Stickstoff, über die Zuführleitung 22 und den Spülkanal 8 entsprechend der in Fig. 3b gezeigten Pfeilrichtung zugeführt. Das Kühlmedium dringt über die Strömungsöffnungen 20 und 15 in das umliegende Gewebe des Fleischstücks 28 ein, und kühlt dieses ab. Im Falle von flüssigem Kohlendioxid entspannt sich dieses beim Austritt aus dem Spülkanal 5 unter Bildung von kaltem Kohlendioxidgas und Kohlendioxidschnee, wobei letzterer beim thermischen Kontakt mit dem umgebenden Fleischgewebe rasch sublimiert.

Das beim Kontakt mit dem umliegenden Gewebe erwärmte Kühlmedium wird - wie durch die Pfeile angedeutet - über den Abzugskanal 9 und die Abgasleitung 23 vermittels einer hier nicht gezeigten Absaugeinheit, die beispielsweise einer an den Abgasanschluss 27 angeschlossenen Abgasleitung 29 nachgeschaltet ist, abgeführt. Im Anschluss an die Behandlung wird die Vorrichtung 1 aus dem Fleischstück 28 herausgezogen, wobei jedoch nach Bedarf eine erneute Behandlung erfolgen kann.

### Bezugszeichenliste:

- 1: Vorrichtung
- 2: Gehäuse
- 3a-d: Injektionseinrichtungen
- 4: Handgriff
- 5: (innere) Kanüle
- 6: (äußere) Kanüle
- 7: Befestigungsabschnitt
- 8: Spülkanal
- 9: Abzugskanal
- 10: Hinterabschnitt
- 11: Vorderabschnitt
- 12: Spitze (des Vorderabschnitts)
- 13: Abschnitt (des Vorderabschnitts)
- 14: -
- 15: Strömungsöffnung
- 16: Bewegungsbegrenzer
- 17: Bewegungsbegrenzer
- 18: Bewegungsbegrenzer
- 19: Vorderabschnitt (der Kanüle 5)
- 20: Strömungsöffnung
- 21: Befestigungsanschluss
- 22: Zuführleitung
- 23: Abgasleitung
- 24: Anschlussstutzen
- 25: Steuereinheit
- 26: Schlauchleitung
- 27: Abgasanschluss
- 28: Fleischstück
- 29: Abgasleitung

## Patentansprüche

1. Vorrichtung zum Behandeln von Frischfleisch mit einem Kühlmedium, mit einem Gehäuse (2) und wenigstens einer Injektionseinrichtung (3a, 3b, 3c, 3d), die eine aus zwei Kanülen (5, 6) aufgebaute Doppelkanüle aufweist, bei der eine erste Kanüle (5) als zum Zuführen eines Kühlmediums in ein Fleischstück (28) bestimmter Spülkanal (8) und eine zweite Kanüle (6) als zum Abführen von beim Wärmekontakt mit dem Fleischstück (28) erwärmtem Kühlmedium bestimmter Abzugskanal (9) fungiert, wobei der Spülkanal (8) mit einer an eine Zuführleitung (26) zum Zuführen eine Kühlmediums anschließbaren Zuführung (22) und der Abzugskanal (9) mit einer an eine Abführleitung (29) anschließbaren Ausleitung (23) strömungsverbunden sind und wenigstens eine der Kanülen (5, 6) zumindest an ihrem Vorderabschnitt mit wenigstens einer seitlichen Strömungsöffnung (15, 20) oder einer Mehrzahl von seitlichen Strömungsöffnungen (15, 20) ausgerüstet ist.

2. Vorrichtung nach Anspruch 1, **dadurch gekennzeichnet, dass** die den Spülkanal (8) und den Abzugskanal (9) bildenden Kanülen (5, 6) koaxial zueinander oder parallel nebeneinander angeordnet sind.

3. Vorrichtung nach einem der vorhergehenden Ansprüche **dadurch gekennzeichnet dass** die den Spülkanal (8) und den Abzugskanal (9) bildenden Kanülen (5, 6) koaxial zueinander angeordnet sind und die radial außenseitig angeordnete Kanüle (6) teleskopartig ausgebildet ist, mit einem rohrförmigen Hinterabschnitt (10) und einem in den Hinterabschnitt (10) einschiebbaren oder über diesen aufziehbaren Vorderabschnitt (11), der mit seitlichen Strömungsöffnungen (15) ausgerüstet ist.

4. Vorrichtung nach Anspruch 3, **dadurch gekennzeichnet, dass** der Vorderabschnitt (11) an seiner im bestimmungsgemäßen Einsatz in das Fleischstück (28) hineinragenden Spitze (12) angeschliffen oder abgestumpft ausgebildet ist.

5. Vorrichtung nach einem der vorhergehenden Ansprüche, **dadurch gekennzeichnet, dass** am Gehäuse (2) eine Mehrzahl an voneinander beabstandet angeordneten Injektionseinrichtungen (3a, 3b, 3c, 3d) vorgesehen sind.

6. Vorrichtung nach Anspruch 5, **dadurch gekennzeichnet, dass** die Injektionseinrichtungen (3a, 3b, 3c, 3d) jeweils mit einem Spülkanal (8) und einem Abzugskanal (9) ausgerüstet und die Spülkanäle (8) der Injektionseinrichtungen (3a, 3b, 3c, d) innerhalb des Gehäuses (2) mit einer gemeinsamen Zuführung (22) und die Abzugskanäle (9) der Injektionseinrichtungen (3a, 3b, 3c, 3d) innerhalb des Gehäuses (2) mit einer gemeinsamen Ausleitung (23) strömungsverbunden sind.

7. Verfahren zum Einbringen eines Kühlmediums in Frischfleisch unter Verwendung einer Vorrichtung (1) nach einem der vorhergehenden Ansprüche, **dadurch gekennzeichnet, dass** die Injektionseinrichtung (3a, 3b, 3c, 3d) in ein Fleischstück (28) eingebracht wird, anschließend ein Kühlmedium über die Zuführung (22) und den Spülkanal (8) in das Fleischstück (28) eingebracht wird, in dem es sich in thermischen Kontakt mit dem umgebenden Fleischgewebe erwärmt und das erwärmte Kühlmedium aus dem Fleischstück (28) über den Abzugskanal (9) und die Ausleitung (23) abgeführt wird.

8. Verfahren nach Anspruch 7, **dadurch gekennzeichnet, dass** das Fleischstück (28) innerhalb von 30 min bis 120 min um 25°C bis 40°C abgekühlt wird.

9. Verfahren nach Anspruch 7 oder 8, **dadurch gekennzeichnet, dass** eine Mehrzahl von Injektionseinrichtungen (3a, 3b, 3c, 3d) zum Einsatz kommt und die Zuführung des Kühlmediums in das Fleischstück (28) über die einzelnen Injektionseinrichtungen (3a, 3b, 3c, 3d) alternierend erfolgt.
